# DEMANDE DE BREVET EUROPEEN

(11) **EP 4 760 580 A1**
(43) Date de publication de la demande: **17.06.2026**
(21) Numéro de dépôt: 25223141.0
(22) Date de dépôt: 12.12.2025
(51) Int. Cl.: G06F 21/75, H04L 9/00

(54) **CIRCUIT ÉLECTRONIQUE PROTÉGÉ CONTRE LES ANALYSES**

(30) Priorité: 16.12.2024 FR 2414216
(71) Demandeur: IDEMIA France, 92400 Courbevoie (FR)
(72) Inventeur: GUICHAOUA, Axel, 92400 COURBEVOIE (FR); THIAW, Aita, 92400 COURBEVOIE (FR); LESNE, Samuel, 92400 COURBEVOIE (FR)
(74) Mandataire: Idemia

(57) **Abrégé**

La présente invention concerne Circuit électronique composé d'une pluralité de portes logiques caractérisé en ce que :
- au moins une partie de la pluralité de portes logiques est divisée en une pluralité de groupes de portes logiques ;
- chaque groupe de portes logiques est alimenté par une tension sélectionnée aléatoirement parmi un ensemble d'au moins deux tensions disponibles ; et
- une nouvelle sélection aléatoire des tensions alimentant les groupes de portes logiques est effectuée entre deux utilisations du circuit.

## Description

L'invention se rapporte à la conception des circuits électroniques et à leur protection contre des attaques visant à déterminer des informations confidentielles traitées par le circuit par analyse de la consommation électrique du circuit.

Les circuits électroniques intégrés sont composés de portes logiques assemblées en grand nombre pour constituer différentes parties du circuit. Ces parties comprennent des blocs fonctionnels chargés d'effectuer des calculs sur une ou plusieurs entrées et de produire un ou plusieurs résultats, des mémoires pour mémoriser ces entrées et ces sorties, par exemples des registres, de la mémoire vive, des portes de Muller , etc...

Chacune des portes logiques composant un circuit a besoin d'être alimenté en tension. A tout instant, ces portes logiques consomment de l'énergie électrique, fournie par leurs alimentations respectives. Cette consommation n'est pas constante et dépend de l'état de la porte, c'est-à-dire de la valeur des signaux d'entrées de la porte logique et de la valeur résultante produite en sortie de la porte logique. Lors du fonctionnement du circuit, rythmé par les signaux d'horloge animant le circuit, de nouvelles valeurs d'entrées sont appliquées en entrée des portes logiques. Après un temps appelé durée de transition, la porte se stabilise dans un nouvel état dépendant de ses entrées pour produire un signal de sortie stable pouvant être utilisé comme entrée d'une autre porte logique. La consommation électrique de la porte évolue entre des valeurs stables représentatives d'un état stable de la porte, et des valeurs fluctuantes pendant la durée de transition.

Il est à noter que l'invention s'applique également aux circuits électroniques asynchrones qui n'utilisent pas de signal d'horloge global pour synchroniser ses différents éléments. Ces différents éléments communiquent localement en indiquant l'envoi et la réception de données, on parle parfois de circuits auto-séquencés.

Certains circuits électroniques manipulent des données sensibles qui doivent rester confidentielles. Les circuits intégrés aux cartes bancaires ou encore les éléments sécurisés utilisés pour gérer la connexion d'un dispositif connectable à un réseau de communication cellulaire sont des exemples de circuits manipulant des données sensibles. Ces circuits doivent être sécurisés pour garantir, autant que faire ce peut, la confidentialité des données sensibles manipulées. La robustesse de ces circuits sécurisé repose sur l'utilisation de données secrètes telles que des clés cryptographiques.

Les circuits électroniques sécurisés sont susceptibles de subir différents types d'attaques visant à découvrir les données sensibles manipulées par le circuit. Les fabricants de circuits électroniques sécurisés conçoivent des contre-mesures visant à faire échouer ces attaques.

Une attaque connue est l'analyse de consommation (en anglais, differential power analysis ou DPA) qui est l'étude des courants et tensions entrants et sortants d'un circuit dans le but de découvrir des informations secrètes comme la clé de chiffrement. Certaines opérations, plus coûteuses, augmentent la consommation électrique du circuit, notamment par l'utilisation de plus de composants (analogiques ou logiques). La consommation dépend également des données manipulées, par exemple la consommation de fuite dépend de la donnée maintenue. Cette analyse des variations et des pics permet de tirer des informations précieuses pour le cryptanalyste.

L'analyse de consommation consiste en la mesure du courant consommé par un circuit électronique pour en déduire les opérations effectuées. Chaque opération réalisée par un circuit électronique met en œuvre un certain nombre de portes logiques. À chaque instant, la mesure du courant consommé peut refléter l'activité du circuit. Bien entendu, les courants consommés sont très faibles, leurs variations infimes et extrêmement rapides. Néanmoins, les instruments de mesure aujourd'hui utilisés permettent des mesures extrêmement fines, avec des résolutions inférieures au microampère et des fréquences d'échantillonnage jusqu'au gigahertz. La sécurité des circuits repose essentiellement sur des gigues temporels, des schémas de masquages ou le chiffrement des données en mémoire par des algorithmes de cryptographie connus: DES, 3-DES, RSA et bien d'autres.

L'analyse fine de la consommation électrique pendant les opérations de calcul permet de distinguer des différences entre des clefs valides et invalides, et parfois, de retrouver la clef secrète dissimulée dans les entrailles du dispositif. La clef est une donnée qui est manipulée par le circuit, sa valeur joue sur la consommation du circuit.

Du fait du très grand nombre de portes logiques intégrées dans le circuit, de la vitesse de fonctionnement du circuit et de la finesse de gravure qui introduit des effets de couplages entre les éléments conducteurs du circuit, les mesures de consommation de courant sont affectées d'un niveau élevé de bruit. Chaque mesure produit une trace correspondant à l'évolution mesurée au cours du temps de la consommation électrique. L'exploitation de ces mesures demandent de procéder à un grand nombre de mesures pour obtenir un grand nombre de traces correspondantes qui sont soumises à une analyse statistique permettant de distinguer le signal utile du bruit dans lequel il est noyé.

L'invention présentée vise à résoudre ce problème en proposant une architecture de circuit rendant une attaque par analyse de la consommation électrique du circuit impossible, ou du moins extrêmement plus difficile.

### Exposé de l'invention

A cet effet, l'invention propose de grouper tout ou partie des portes logiques du circuit en groupes. Le circuit comporte au moins deux tensions différentes. Chaque groupe de portes logiques peut être alimenté par l'une des tensions disponibles. La tension appliquée à un groupe de portes est sélectionnée par un signal de commande. Dans un mode de réalisation toutes les tensions disponibles peuvent être sélectionnées pour chaque groupe de portes logiques. Dans d'autres modes de réalisation, l'ensemble des tensions disponibles n'est pas systématiquement sélectionnable pour l'ensemble des groupes de portes logiques. Dans ces modes de réalisation, chaque groupe de portes logiques peut être alimenté par une tension sélectionnée dans un sous-ensemble de toutes les tensions disponibles, ce sous-ensemble comprenant au moins deux tensions disponibles.

Cette sélection est aléatoire et est modifiée régulièrement. Ainsi, le profil électromagnétique du circuit est modifié lors de chaque utilisation du circuit de manière aléatoire. La consommation de chaque groupe dépend de la tension sélectionnée pour l'alimenter. La tension appliquée au groupe impacte le temps de transition des portes logiques ainsi que les effets de couplage entre les conducteurs métalliques dans le circuit. En conséquence, le bruit affectant la mesure de tension est également modifié de manière aléatoire par la sélection des tensions alimentant les groupes de portes. Ainsi, les différentes traces obtenues par un attaquant par mesure de la consommation du circuit diffèrent aléatoirement tant au niveau des mesures de consommation que du bruit affectant ces mesures, rendant sinon impossible, du moins extrêmement plus complexe de corréler ces traces pour obtenir une information exploitable concernant les données sensibles traitées par le circuit.

Il est ainsi proposé un circuit électronique composé d'une pluralité de portes logiques caractérisé en ce que :
- au moins une partie de la pluralité de portes logiques est divisée en une pluralité de groupes de portes logiques ;
- chaque groupe de portes logiques est alimenté par une tension sélectionnée aléatoirement parmi un ensemble d'au moins deux tensions disponibles ; et
- une nouvelle sélection aléatoire des tensions alimentant les groupes de portes logiques est effectuée entre deux utilisations du circuit.

Dans certains modes de réalisation, la pluralité de portes logiques formant des blocs fonctionnels, au moins un bloc fonctionnel est composé d'au moins deux groupes de portes logiques.

Dans certains modes de réalisation, chaque bloc fonctionnel est composé d'au moins deux groupes de portes logiques.

Dans certains modes de réalisation, certains blocs fonctionnels manipulant des données sensibles, au moins un bloc fonctionnel manipulant des données sensibles est composé d'au moins deux groupes de portes logiques.

Dans certains modes de réalisation, chaque bloc fonctionnel manipulant des données sensibles est composé d'au moins deux groupes de portes logiques. Dans certains modes de réalisation :
- le circuit comprend au moins un régulateur de tension chargé de générer l'ensemble des tensions disponibles à partir d'une tension d'alimentation générale du circuit ; et
- le au moins un régulateur force une réinitialisation du circuit si la tension d'alimentation générale ne permet pas de générer l'ensemble des tensions disponibles.

### Brève description des dessins

D'autres caractéristiques, détails et avantages de l'invention apparaîtront à la lecture de la description détaillée ci-après. Celle-ci est purement illustrative et doit être lue en regard des dessins annexés, sur lesquels :

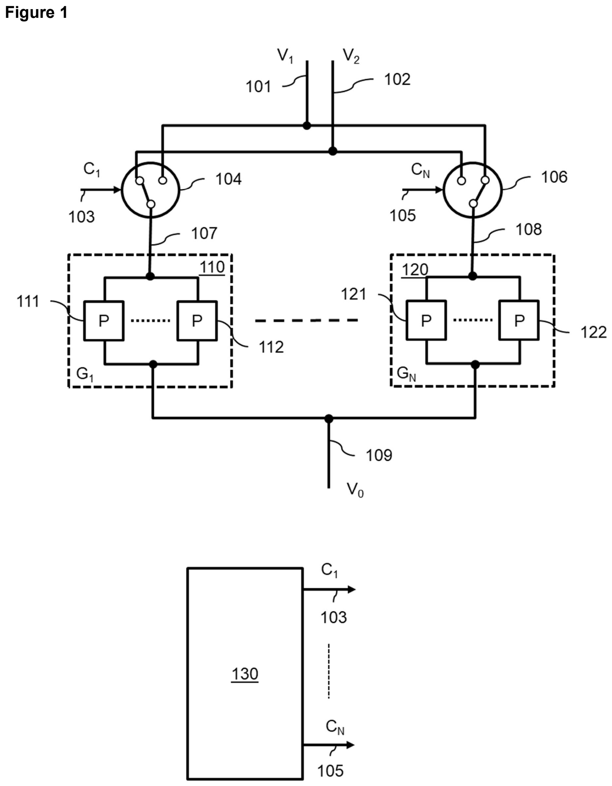

La figure 1 illustre le schéma de principe de fonctionnement d'un exemple de réalisation de l'invention.

### Description détaillée

La figure 1 illustre le schéma de principe de fonctionnement d'un exemple de réalisation de l'invention.

Le circuit est décomposé en N groupes de portes logiques, N étant un entier strictement supérieur à 1, du groupe G₁ 110 au groupe G_{N} 120. Chaque groupe de portes logiques comprend un nombre quelconque de portes logiques 111, 112, 121, 122. Il est à noter ici que l'intégralité des portes logiques formant le circuit n'appartient pas forcément à un groupe de portes logiques au sens de la solution ici décrite. Certaines parties du circuit, typiquement des parties non sensibles ne manipulant pas de données sensibles, peuvent être exclues de la découpe en groupe de portes logiques.

Chaque groupe de portes logiques est connecté à la tension nulle V₀ 109, également appelée masse du circuit. Chaque groupe de portes logiques est alimenté par une tension d'alimentation 107, 108.

Le circuit dispose d'au moins deux tensions d'alimentation disponibles, ici V₁ 101 et V₂ 102. Les tensions V₁ et V₂ sont différentes. Le schéma est réalisé avec deux tensions différentes pour des raisons de clarté, mais dans la pratique un nombre de tensions supérieur peut être utilisé avantageusement.

La tension d'alimentation de chaque groupe de portes logiques est déterminée par un sélecteur commandable 104, 106. Chaque sélecteur est connecté en entrée à au moins deux parmi les tensions d'alimentation disponibles 101, 102 et est connecté en sortie à l'alimentation du groupe de portes logiques 107, 108. La position du sélecteur et donc la tension d'alimentation disponible venant effectivement alimenter le groupe de portes logiques est commandée par un signal de commande C₁, C_{N}, 103, 105.

Les signaux de commande sont générés par un module 130 de gestion des tensions. Ce module 130 de gestion des tensions génère aléatoirement les N signaux de contrôle 103 à 105. Cette génération aléatoire doit être du type non prédictible, c'est-à-dire que la séquence de signaux aléatoire générée doit être différente lors de chaque tirage. En particulier, après chaque mise sous tension du circuit, la séquence générée doit être différente pour éviter qu'un attaquant puisse obtenir à chaque fois la même configuration en coupant l'alimentation du circuit entre chaque mesure.

Le module 130 de gestion des tensions est sollicité à la mise sous tension du circuit pour générer une configuration aléatoire des tensions. Ceci peut être suffisant pour des composant qui sont typiquement alimenté à chaque utilisation, l'alimentation étant coupée entre deux utilisations. Toutefois, pour se prémunir d'un attaquant qui prendrait le soin de ne jamais couper l'alimentation du circuit attaqué, il est avantageux de solliciter de nouveau le module 130 de gestion des tensions régulièrement. Par exemple, les blocs fonctionnels les plus sensibles, ceux qui manipulent des données sensibles, peuvent être couplés avec le module 130 de gestion des tensions pour déclencher la génération d'une nouvelle configuration de tensions, par exemple préalablement ou à la fin de l'exécution du bloc fonctionnel. Ainsi, on s'assure que chaque nouvelle exécution de ces blocs fonctionnels sensibles bénéficie d'une configuration de tensions nouvelle.

Certains blocs fonctionnels procèdent à des calculs cryptographiques comportant l'exécution de boucles de traitement répétées parfois appelées rondes. Dans certains modes de réalisation, une nouvelle configuration de tensions est générée entre chaque exécution de la boucle par le bloc fonctionnel.

D'une manière générale, la génération d'une nouvelle configuration de tensions peut être déclenchée par le logiciel exécuté par le circuit. Il appartient alors au concepteur du logiciel d'inclure ce déclenchement aux endroits opportuns de son code. Le déclenchement peut aussi être introduit au sein d'un groupe fonctionnel, au début de son exécution, à la fin de son exécution ou encore au sein de son exécution, par exemple au sein d'une ronde exécutée en boucle par le bloc fonctionnel.

Concernant la décomposition en groupes des portes logiques du circuit, il faut noter que l'introduction d'au moins deux groupes de portes logiques et deux tensions d'alimentation, permet déjà d'obtenir quatre configurations de tensions. Ainsi, si un nombre T de traces étaient nécessaires pour obtenir des informations sensibles du circuit sans l'invention, il est nécessaire d'en obtenir quatre fois plus pour générer T traces pour chaque configuration et obtenir les informations sensibles.

Toutefois, une multiplication par quatre du nombre de traces devant être obtenues pour casser la sécurité du circuit peut ne pas être considéré comme suffisant et un plus grand nombre de groupes et/ou de tensions d'alimentation disponibles est avantageux. Il faut noter que le nombre de configurations de tension et donc de traces nécessaires pour attaquer le circuit augmente de façon exponentielle avec le nombre de groupes de portes logiques et le nombre de tensions d'alimentation disponibles. Avantageusement, un nombre de groupes sensiblement supérieur à deux est utilisé.

Il faut aussi considérer que les ressources matérielles consacrées à la contre-mesure augmentent également avec le nombre de groupes et le nombre de tensions d'alimentation utilisés. Chaque groupe nécessite un sélecteur de tension commandable auquel doivent être connecté chaque tension d'alimentation disponible et un signal de commande. De même, le module 130 de gestion des tensions doit générer un signal de commande par sélecteur. Ces ressources matérielles font partie du circuit et entrent en concurrence avec les ressources matérielles utiles du circuit. De ce fait, le nombre de groupes utilisé doit rester raisonnable, typiquement il ne faut pas que les ressources matérielles consacrées à la solution proposée nécessitent un pourcentage trop important des capacités du circuit.

La taille des groupes vis-à-vis de la taille des blocs fonctionnels est également un critère pouvant être pris en compte pour déterminer le nombre de groupes. Un bloc fonctionnel est un ensemble de portes logiques réalisant une fonction particulière. A ce titre, un bloc fonctionnel est un ensemble de portes logiques qui a pour entrée et pour sortie une ou plusieurs mémoires telle que des registres du circuit ou des portes de Muller. Un registre peut comporter un ou plusieurs bits. Un bloc fonctionnel ne comprend pas de mémoire autre que ses entrées-sorties.

Certains de ces blocs fonctionnels sont considérés comme sensibles du fait qu'ils manipulent des données sensibles stockées dans le circuit. Ce sont ces blocs fonctionnels qui sont particulièrement visés par les attaques et dont le fonctionnement est la cible privilégiée de l'attaque. Il peut donc être particulièrement avantageux que les blocs fonctionnels du circuit considérés individuellement puissent fonctionner selon diverses configurations de tensions. Pour ce faire, avantageusement, on sélectionnera des groupes dont la taille est inférieure à la taille des blocs fonctionnels. Un critère correspondant peut être pris en compte lors du découpage du circuit en groupes de portes logiques. Ce critère est que le groupe de portes logiques, contrairement au bloc fonctionnel comprend des entrées et/ou des sorties qui ne sont pas des mémoires telle que des registres du circuit ou des portes de Muller. Ainsi, chaque bloc fonctionnel du circuit bénéficie d'une diversité de configuration de tensions.

Alternativement, les blocs fonctionnels sensibles sont identifiés et seuls ces blocs fonctionnels sensibles sont sujets à la contrainte d'être composés d'au moins deux groupes de portes logiques.

Concernant le choix des tensions disponibles pouvant alimenter les différents groupes de portes logiques du circuit, certaines contraintes s'appliquent. En effet, il est nécessaire de conserver la fonctionnalité du groupe de portes logiques. Le circuit est supposé fonctionner à une tension nominale, par exemple une tension de 1 V. Toutefois, les circuits possèdent une marge de tolérance sur la tension d'alimentation et restent fonctionnels dans une plage de tension centrée sur cette tension nominale. La marge de tension permettant à un circuit de fonctionner est typiquement de l'ordre de 10 à 15 % avec les technologies actuelles. Cela signifie que le circuit reste fonctionnel lorsqu'il est alimenté par une tension comprise entre la valeur nominale moins 10% et la valeur nominale plus 10%.

Dans un exemple de réalisation, la tension nominale du circuit étant de 1 V, les tensions d'alimentation disponibles sont au nombre de trois et ont les valeurs suivantes : 0,9 V, 1 V et 1,1 V.

Le circuit dans son ensemble est alimenté par une tension d'alimentation générale à partir de laquelle sont générées les tensions d'alimentation disponibles dans le cadre de la solution décrite. En l'absence d'arrangement spécifique comme des pompes de charge, la tension d'alimentation générale doit être au moins égale à la tension d'alimentation disponible la plus élevée pour permettre de générer toutes les tensions d'alimentation disponibles. Dans notre exemple, le circuit doit être alimenté par une alimentation générale au moins égale à 1,1 V pour permettre de générer les tensions d'alimentation disponibles à 0,9, 1 et 1,1 V.

Un attaquant pourrait être tenté de limiter la tension d'alimentation générale pour limiter le nombre de tensions disponibles et ce faisant le nombre de configurations de tensions pouvant être utilisées par le circuit. Par exemple, si la tension d'alimentation générale du circuit est de 0,95 V, seule la tension de 0,9 V est réellement disponible et une seule configuration de tensions est opérationnelle, celle où tous les groupes sont alimentés à 0,9 V.

Une possibilité est que le circuit teste la valeur de cette tension d'alimentation générale et interdisent le fonctionnement du circuit si la tension d'alimentation générale n'est pas au moins égale à la tension d'alimentation disponible la plus élevée. Par exemple, une réinitialisation du circuit est forcée lorsque la tension d'alimentation générale est trop faible.

Une possibilité est d'utiliser un ou plusieurs régulateurs de tension dans le circuit. Un régulateur de tension prend la tension d'alimentation générale du circuit et produit une tension régulée en sortie à une valeur définie. A partir de la sortie régulée, il est possible de générer plusieurs tensions décalées à l'aide d'un réseau de résistances. Il est donc possible d'utiliser un seul régulateur de tension pour générer l'ensemble des tensions disponibles. Il est également possible d'utiliser un régulateur de tension par tension disponible. Entre ces deux solutions, toutes les solutions intermédiaires sont possibles. Ainsi, l'ensemble des tensions disponibles est généré par un ou plusieurs régulateurs de tensions. Une protection sur ces régulateurs peut être prévue pour s'assurer que les tensions disponibles peuvent être effectivement générées à partir de la tension d'alimentation générale.

Ainsi, grâce à la solution décrite, on rend beaucoup plus difficile une attaque par analyse de la consommation du circuit.

L'analyse de consommation d'un circuit nécessite de relever une grande quantité de traces qui seront ensuite moyennées pour faire émerger le signal du bruit. Or, à chaque utilisation du circuit on peut observer la consommation due à une combinaison de tensions différente, celle-ci est difficilement comparable à la précédente. Pour un ensemble de m tensions et n groupes différents avec une distribution uniforme des signaux de sélection, un attaquant doit collecter un nombre de trace multiplié par un facteur de l'ordre de *mⁿ*, l'écart-type de la distribution probabiliste des combinaisons de tension, afin d'espérer observer toutes les combinaisons possibles.

Pour le traitement des traces, l'attaquant peut tenter de discriminer les traces par combinaisons de valeurs de tensions au moyen d'une étude supplémentaire, considérée relativement complexe. Sans discrimination des traces par étude préalable, la disparité des temps de transitions entre les traces relevées entraine un lissage temporel des transitions pour les traces moyennes. On introduit donc une incertitude supplémentaire. En effet, les consommations dues à des transitions successives proches s'étalent dans le temps et se chevauchent pour les traces moyennes. Une gigue temporelle avec une granularité plus faible que celle d'un coup d'horloge est introduite.

Naturellement, pour satisfaire des besoins spécifiques, une personne compétente dans le domaine de l'invention pourra appliquer des modifications dans la description précédente.

Bien que la présente invention ait été décrite ci-dessus en référence à des modes de réalisation spécifiques, la présente invention n'est pas limitée aux modes de réalisation spécifiques, et les modifications qui se trouvent dans le champ d'application de la présente invention seront évidentes pour une personne versée dans l'art.

## Revendications

1. Circuit électronique composé d'une pluralité de portes logiques **caractérisé en ce que** :
- au moins une partie de la pluralité de portes logiques est divisée en une pluralité de groupes de portes logiques ;
- chaque groupe de portes logiques est alimenté par une tension sélectionnée aléatoirement parmi un ensemble d'au moins deux tensions disponibles ; et
- une nouvelle sélection aléatoire des tensions alimentant les groupes de portes logiques est effectuée entre deux utilisations du circuit.

2. Circuit électronique selon la revendication 1, **caractérisé en ce que** la pluralité de portes logiques formant des blocs fonctionnels, au moins un bloc fonctionnel est composé d'au moins deux groupes de portes logiques.

3. Circuit électronique selon la revendication 2, **caractérisé en ce que** chaque bloc fonctionnel est composé d'au moins deux groupes de portes logiques.

4. Circuit électronique selon la revendication 2, **caractérisé en ce que**, certains blocs fonctionnels manipulant des données sensibles, au moins un bloc fonctionnel manipulant des données sensibles est composé d'au moins deux groupes de portes logiques.

5. Circuit électronique selon la revendication 4, **caractérisé en ce que**, chaque bloc fonctionnel manipulant des données sensibles est composé d'au moins deux groupes de portes logiques.

6. Circuit électronique selon la revendication 1, **caractérisé en ce que** :
- le circuit comprend au moins un régulateur de tension chargé de générer l'ensemble des tensions disponibles à partir d'une tension d'alimentation générale du circuit ; et
- le au moins un régulateur force une réinitialisation du circuit si la tension d'alimentation générale ne permet pas de générer l'ensemble des tensions disponibles.
